# EUROPÄISCHE PATENTANMELDUNG

(11) **EP 0 881 412 A2**
(43) Veröffentlichungstag der Anmeldung: **02.12.1998**
(21) Anmeldenummer: 98106635.0
(22) Anmeldetag: 09.04.1998
(51) Int. Cl.: F16H 55/18

(54) **Getriebezahnrad zum Ausgleich des Zahnflankenspiels**

(30) Priorität: 26.05.1997 DE 19721852
(71) Anmelder: Bayerische Motoren Werke Aktiengesellschaft, 80788 München (DE)
(72) Erfinder: Bischof, Peter, 91180 Heideck (DE); Mitterleitner, Klaus, 81243 München (DE); Ringholz, Thomas, 80937 München (DE)

(57) **Zusammenfassung**

Es wird ein Getriebezahnrad aus mindestens zwei an ihrem Umfang mit Zähnen versehenen Zahnradelementen beschrieben, wobei diese koaxial, mit zueinander versetzten Zähnen (6,7), in Umfangsrichtung verschiebbar, miteinander durch mindestens ein Verbindungsglied (5) formschlüssig so verbunden sind, daß für den Eingriff eines kämmenden Zahnrades das vorhandene Zahnflankenspiel verringert oder aufgehoben wird. Dabei verbindet das Verbindungsglied die Zahnradelemente in Umfangsrichtung unverschieblich zueinander und verursacht durch seine Wärmedehnung die Verschiebung der Zahnradelemente zueinander.

## Beschreibung

Es sind bereits spielfrei arbeitende Zahntriebe bekannt, bei denen das eine Rad eines miteinander kämmenden Zahnradpaares aus zwei Zahnkränzen besteht, von denen der eine die Drehmomentübertragung und der andere den Spielausgleich übernimmt und die gegeneinander durch eine Feder in Umfangsrichtung verspannt, also beweglich miteinander verbunden sind. Einen solchen Zahntrieb mit einem Zahnrad aus zwei gegeneinander verspannten Zahnradelementen beschreibt das deutsche Gebrauchsmuster 74 00 276.

Bisher bekannte Motor- und Getriebekonstruktionen weisen aber das Problem auf, daß die Gehäuse gegenüber den verwendeten Wellen, Lagern und Zahnrädern eine unterschiedliche Wärmedehnung aufweisen. Dies insbesondere, wenn Stahlzahnräder in Aluminiumgehäusen verwendet werden.

Selbst beim gezielten Einbau von Zahnrädern mit sehr geringem Zahnflankenspiel bei Umgebungstemperaturen um circa 20° Celsius, resultiert aus der Achsabstandsänderung bei höheren Betriebstemperaturen ein deutlich erhöhtes Zahnflankenspiel. Dadurch kann ein deutlich wahrnehmbares Rasselgeräusch auftreten.

Aus diesem Grund wird das Zahnflankenspiel eines im Zahneingriff befindlichen Zahnradpaares durch ein zusätzliches zu einem Zahnrad koaxial gelagertes Zahnradelement ausgeglichen, das durch eine oder mehrere Federn versetzt in Umfangsrichtung beweglich gegen das Zahnrad verspannt ist.

Das hat den Nachteil, daß meist nur das Leerlaufgeräusch der im Eingriff befindlichen Zahnräder positiv beeinflußt wird. Es kann nur in einer Lastrichtung ein wirkungsvoller Ausgleich erfolgen. Bei Lastwechseln wird die Feder überdrückt und somit kommt die rückwärtige Zahnflanke zur Anlage. Im Schiebebetrieb hat dies meist die Folge, daß ein Rasselgeräusch entsteht. Außerdem ist nachteilig, daß durch die Federkraft eine erhöhte Reibung an den Zahnflanken entsteht, die sich meistens durch ein Pfeifgeräusch bemerkbar macht.

Daher ist es Aufgabe der Erfindung, ein Getriebezahnrad bereitzustellen, das das Zahnflankenspiel einer Zahnradpaarung definiert ausgleicht, unabhängig von Federkräften und damit unabhängig vom durch die Zahnradpaarung gerade übertragenen Drehmoment.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung besteht ein Getriebezahnrad aus mindestens zwei an ihrem Umfang mit Zähnen versehenen Zahnradelementen, die koaxial, mit zueinander versetzten Zähnen, in Umfangsrichtung verschiebbar, miteinander durch mindestens ein Verbindungsglied formschlüssig so verbunden sind, daß für den Eingriff eines kämmenden Zahnrades das vorhandene Zahnflankenspiel verringert oder aufgehoben wird, wobei das Verbindungsglied die Zahnradelemente in Umfangsrichtung unverschieblich zueinander verbindet und durch seine Wärmedehnung die Verschiebung der Zahnradelemente zueinander in Umfangsrichtung verursacht.

Wenn die verschieblich zueinander gelagerten Zahnradelemente fest miteinander durch ein Verbindungsglied verbunden sind, hat das den Vorteil, daß ihre Verlagerung gegeneinander auf einer gezielten Ausnutzung unterschiedlicher Wärmeausdehnungskoeffizienten der verwendeten Werkstoffe für die Zahnradelemente und das Verbindungsglied beruht. Womit hervorragend das Zahnflankenspiel ausgeglichen werden kann, das durch eine unterschiedliche Wärmeausdehnung zwischen Zahnrädern und Getriebegehäuse entsteht. Dabei kann das Verbindungsglied zwischen den Zahnradelementen entweder aus einem Werkstoff bestehen, der eine gezielt größere Wärmeausdehnung oder eine gezielt kleinere Wärmeausdehnung besitzt als die Zahnradelemente. Durch eine abgestimmte Positionierung und Länge des Verbindungsgliedes kann ein vollständiger Zahnflankenspielausgleich oder ein deutlich reduziertes Zahnflankenspiel über den gesamten Betriebstemperaturbereich von unter -40° Celsius bis weit über 200° Celsius erreicht werden.

Vorteilhafterweise werden die Zahnradelemente zu dem mit ihnen kämmenden Zahnrad nicht verspannt, sondern es wird nur das Spiel zwischen den Zahnflanken ausgeglichen. Deshalb sind die Reibungsverluste gegenüber einem Zahnflankenspielausgleich durch Federkraft deutlich geringer. Das wirkt sich auch positiv auf den Wirkungsgrad und den Verschleiß im Getriebe aus.

Außerdem ist der erfindungsgemäße Zahnflankenspielausgleich in beiden Drehrichtungen des Zahnradpaares gewährleistet. Dadurch werden die im Schiebebetrieb und die durch die Drehungleichförmigkeit erzeugten Rasselgeräusche verringert.

Bei einer bevorzugten Ausführung der Erfindung ist das Verbindungsglied ein Zug-/Druckstab. Das hat den Vorteil, daß der Verdrehwinkel zwischen den beiden Zahnradelementen bei der jeweiligen Temperatur auf einfache Weise vorherbestimmt werden kann.

Bei einer weiteren vorteilhaften Ausführung der Erfindung ist das Verbindungsglied zwischen beiden Zahnradelementen kreissehnenartig angebracht und mit jeweils einem Ende formschlüssig mit jeweils einem Zahnradelement verbunden.

Ein solches Getriebezahnrad ist vorteilhafterweise einfach herzustellen.

Ein bevorzugtes Ausführungsbeispiel der Erfindung ist in der nachfolgenden Beschreibung und der zugehörigen Zeichnung näher dargestellt. Es zeigen
- Figur 1: eine Draufsicht auf eine Zahnradpaarung gemäß der Erfindung und
- Figur 2: eine weitere Draufsicht auf die Zahnradpaarung von Figur 1, um 90° gedreht.

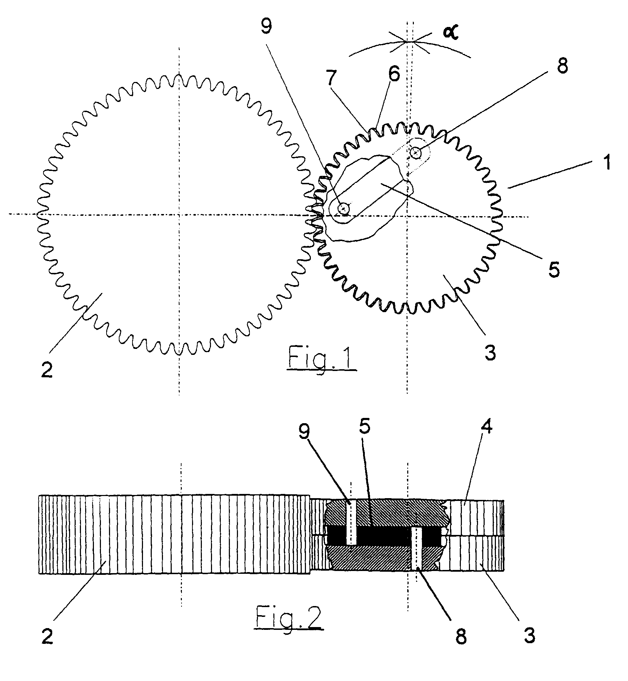

In Figur 1 kämmt ein Getriebezahnrad 1 mit einem Zahnrad 2. Das Getriebezahnrad 1 besteht aus zwei an ihrem Umfang mit Zähnen versehenen Zahnradelementen 3, 4, die koaxial, mit zueinander versetzten Zähnen, in Umfangsrichtung verschoben, miteinander durch ein Verbindungsglied 5 verbunden sind. Die zueinander versetzten Zähne der Zahnradelemente 3, 4 des Getriebezahnrades 1 sind in der Zeichnung dargestellt durch den Verdrehwinkel α, der den Versatz der schematisch dargestellten einzelnen Zahnflanken 6 der Zähne des Zahnradelementes 3 und 7 der Zähne des Zahnradelementes 4 verdeutlicht. Obwohl bei einer Draufsicht eigentlich nur die Umrisskanten sichtbar sind, wurden bei der schematischen Darstellung der Zahnflanken 6,7 bewußt auch die unsichtbaren Linien gezeichnet, zum besseren Verständnis.

Bei dem Getriebezahnrad 1 ist ebenfalls zur besseren Darstellung durch eine geschlossene Bruchlinie das Verbindungsglied 5 sichtbar. Dieses ist mit einem Bolzen 8 mit dem Zahnradelement 3 formschlüssig verbunden, ebenso über einen Bolzen 9 mit dem Zahnradelement 4. Die beiden Bolzen 8, 9 verbinden die Enden des Verbindungsgliedes 5 mit dem jeweiligen Zahnradelement 3, 4.

In Figur 2 ist diese Verbindung näher dargestellt. Das Zahnrad 2 kämmt mit den beiden Zahnradelementen 3, 4. Zwischen diesen Zahnradelementen 3, 4 befindet sich das Verbindungsglied 5 als Zug-/Druckstab, kreissehnenartig mit den Zahnradelementen 3, 4 verbunden. Die formschlüssige Verbindung wird dadurch erreicht, daß der Bolzen 8 jeweils zur Hälfte in jeweils eine Bohrung im Zahnradelement 3 und im Verbindungsglied 5 hineinragt, während der Bolzen 9 auf die gleiche Weise das Zahnradelement 4 mit dem Verbindungsglied 5 verbindet.

Dehnt sich nun bei steigender Temperatur das Verbindungsglied 5 in seiner Länge aus, werden die beiden Zahnradelemente 3,4 dadurch so gegeneinander verschoben, daß sich das Zahnflankenspiel zum Zahnrad 2 verringert.

## Patentansprüche

1. Getriebezahnrad (1) aus mindestens zwei an ihrem Umfang mit Zähnen versehenen Zahnradelementen (3,4), die koaxial, mit zueinander versetzten Zähnen, in Umfangsrichtung verschiebbar, miteinander durch mindestens ein Verbindungsglied (5) formschlüssig so verbunden sind, daß für den Eingriff eines kämmenden Zahnrades (2) das vorhandene Zahnflankenspiel verringert oder aufgehoben wird, dadurch gekennzeichnet, daß das Verbindungsglied (5) die Zahnradelemente (3,4) in Umfangsrichtung unverschieblich zueinander verbindet und durch seine Wärmedehnung die Verschiebung der Zahnradelemente (3,4) zueinander in Umfangsrichtung verursacht.

2. Getriebezahnrad (1) nach Anspruch 1, dadurch gekennzeichnet, daß das Verbindungsglied (5) ein Zug-/Druckstab ist.

3. Getriebezahnrad (1) nach Anspruch 1 oder 2, dadurch gekennzeichnet, daß das Verbindungsglied (5) zwischen beiden Zahnradelementen (3,4) kreissehnenartig angebracht ist und mit jeweils einem Ende formschlüssig mit jeweils einem Zahnradelement (3,4) verbunden ist.
